# EUROPEAN PATENT APPLICATION

(11) **EP 4 832 231 A1**
(43) Date of publication of application: **28.10.2026**
(21) Application number: 24928036.3
(22) Date of filing: 28.08.2024
(51) Int. Cl.: H01M 50/531, H01M 10/04

(54) **BATTERY AND MANUFACTURING METHOD THEREFOR, TOP COVER ASSEMBLY, BATTERY PACK, ELECTRIC DEVICE AND ENERGY STORAGE DEVICE**

(30) Priority: 06.03.2024 CN 202410254401
(71) Applicant: Contemporary Amperex Technology Co., Limited, Ningde, Fujian 352100 (CN)
(72) Inventor: CHEN, Xingdi, Ningde, Fujian 352100 (CN); HE, Runyong, Ningde, Fujian 352100 (CN)
(74) Representative: Ran, Handong
(86) International application number: PCT/CN2024/115131
(87) International publication number: WO 2025/185105

(57) **Abstract**

A battery (4) and a manufacturing method therefor, a top cover assembly (20), a battery pack, an electric device and an energy storage device. The battery (4) comprises: a case (10), which defines an accommodation space and is provided with an opening; a top cover assembly (20), which is arranged on the case (10), seals the opening, and comprises a top cover body (21), and a first connector (22) and a second connector (23), which can conduct electricity, wherein the first connector (22) comprises a first connection portion (221) and a first exposed portion (222) connected to the first connection portion (221), the second connector (23) comprises a second connection portion (231) and a second exposed portion (232) connected to the second connection portion (231), the first connection portion (221) and the second connection portion (231) each comprising a connection surface extending in a first direction, the first exposed portion (222) and the second exposed portion (232) being exposed outside the case (10); and an electrode assembly (30), which is accommodated in the accommodation space and comprises a positive tab (31) and a negative tab (32), which extend in the first direction, a first connection surface (221a) of the first connection portion (221) being in surface connection with the positive tab (31) or the negative tab (32), and a second connection surface (231a) of the second connection portion (231) being in surface connection with the positive tab (31) or the negative tab (32).

## Description

### CROSS-REFERENCE TO RELATED APPLICATIONS

This disclosure is based on the Chinese Patent Application No. 202410254401.3, filed on March 6, 2024 and entitled "BATTERY AND MANUFACTURING METHOD THEREOF, TOP COVER ASSEMBLY, BATTERY PACK, ELECTRIC APPARATUS, AND ENERGY STORAGE APPARATUS", and claims the priority of this Chinese patent application, which is incorporated herein by reference in its entirety.

### TECHNICAL FIELD

This disclosure relates to the field of battery technology, and in particular to a battery and a manufacturing method thereof, a top cover assembly, a battery pack, an electric apparatus, and an energy storage apparatus.

### BACKGROUND

The application of new energy batteries in life and industry is becoming more and more widespread. For example, new energy vehicles equipped with batteries have been widely used. In addition, batteries are increasingly used in the energy storage field and the like.

In a new energy vehicle equipped with a battery, the battery can be used to provide all or part of the power. In the energy storage field, the battery can be installed in an energy storage box or directly installed on a user side. In these application scenarios, higher requirements are continuously imposed on the reliability of the battery.

### SUMMARY

To solve the above technical problems, this disclosure provides a high-reliability battery in which tabs do not need to be bent, a manufacturing method of the battery, a top cover assembly, a battery pack, an electric apparatus, and an energy storage apparatus.

This disclosure is implemented through the following technical solutions.

A first aspect of this disclosure provides a battery, including: a housing, defining an accommodation space and having an opening on one side; a top cover assembly, provided on the housing and closing the opening, where the top cover assembly includes a top cover body as well as a first connecting member and a second connecting member that are conductive and provided on the top cover body, the first connecting member includes a first connecting portion and a first exposed portion connected to the first connecting portion, the second connecting member includes a second connecting portion and a second exposed portion connected to the second connecting portion, the first connecting portion and the second connecting portion each include a connecting surface extending along a first direction, and the first exposed portion and the second exposed portion are exposed outside the housing; and an electrode assembly, accommodated in the accommodation space, where the electrode assembly includes a positive electrode tab and a negative electrode tab extending along the first direction, the connecting surface of the first connecting portion is in surface connection with the positive electrode tab or the negative electrode tab, and the connecting surface of the second connecting portion is in surface connection with the positive electrode tab or the negative electrode tab that is not connected to the first connecting portion.

Since the connecting surface of the first connecting portion, the connecting surface of the second connecting portion, and the positive electrode tab and negative electrode tab of the electrode assembly all extend along the first direction, the positive electrode tab and negative electrode tab of the electrode assembly can respectively achieve non-bending surface connection with the connecting surface of the first connecting portion and the connecting surface of the second connecting portion, reducing the risk of fracture of the positive electrode tab and negative electrode tab, and reducing gaps between the tabs (the positive electrode tab and negative electrode tab) and the connecting surfaces of the connecting portions (the first connecting portion and second connecting portion), thereby achieving more stable connection and improving the reliability of the battery.

In some embodiments, the first connecting portion and the first exposed portion are connected in a bent manner; and the second connecting portion and the second exposed portion are connected in a bent manner.

Since the first connecting portion and the first exposed portion are connected in a bent manner, and the second connecting portion and the second exposed portion are connected in a bent manner, space occupation is reduced, and more space is provided for battery grouping.

In some embodiments, the first exposed portion and the second exposed portion are both parallel to a top surface of the top cover body.

Making the first exposed portion and the second exposed portion both parallel to the top surface of the top cover body not only reduces space occupation but also facilitates connection of busbar components, improving the battery grouping efficiency.

In some embodiments, the first connecting member and the second connecting member are arranged side by side along a second direction on the top cover body; and/or the first connecting member and the second connecting member are arranged side by side along a third direction on the top cover body; where the first direction, the second direction, and the third direction are perpendicular to each other.

By being arranged side by side, the first connecting member and the second connecting member can be conveniently connected to the positive electrode tab and the negative electrode tab, improving the battery manufacturing efficiency. The first connecting member and the second connecting member may be arranged side by side in pairs in any of the second direction or the third direction, to adapt to positions of tabs of electrode assemblies of different specifications/types, achieving wide adaptability.

In some embodiments, the first connecting member further includes a third connecting portion connected to the first connecting portion, the third connecting portion includes a connecting surface extending along the first direction, and the number of the second connecting members is an even number.

By making the first connecting member have the connecting surface of the first connecting portion and the connecting surface of the third connecting portion, the first connecting member can be connected to two tabs, and by cooperation with an even number of second connecting members, a connection of the top cover assembly to multiple electrode assemblies can be easily implemented, and a parallel connection or serial connection between multiple electrode assemblies is also facilitated.

In some embodiments, the battery includes at least two electrode assemblies, the first connecting portion of the first connecting member is connected to the positive electrode tab or the negative electrode tab of one electrode assembly, the third connecting portion of the first connecting member is connected to the positive electrode tab or the negative electrode tab of another electrode assembly, and tabs in the electrode assemblies that are not connected to the first connecting member are respectively connected to the second connecting portion of the second connecting member.

At least two electrode assemblies without bent tabs can be connected in series or parallel through one top cover, improving the connection reliability and battery grouping efficiency.

In some embodiments, the first connecting member further includes a third connecting portion connected to the first connecting portion, and the third connecting portion includes a connecting surface extending along the first direction. The second connecting member further includes a fourth connecting portion connected to the second connecting portion, and the fourth connecting portion includes a connecting surface extending along the first direction.

By making the first connecting member have the connecting surface of the first connecting portion and the connecting surface of the third connecting portion, and making the second connecting member have the connecting surface of the second connecting portion and the connecting surface of the fourth connecting portion, the first connecting member and the second connecting member can each be connected to two tabs, so that a connection of the top cover assembly to multiple electrode assemblies can be easily implemented, and a parallel connection between multiple electrode assemblies is also facilitated. At least two electrode assemblies without bent tabs are connected in parallel through one top cover, improving the connection reliability and battery grouping efficiency.

In some embodiments, the battery includes at least two electrode assemblies, the first connecting portion of the first connecting member is connected to the positive electrode tab of one electrode assembly, the third connecting portion of the first connecting member is connected to the positive electrode tab of another electrode assembly, and the negative electrode tab of the one electrode assembly and the negative electrode tab of the another electrode assembly are respectively connected to the second connecting portion and the fourth connecting portion of the second connecting member.

At least two electrode assemblies without bent tabs are connected in parallel through one top cover, improving the connection reliability and battery grouping efficiency.

In some embodiments, the first connecting portion and the third connecting portion are connected through the first bent portion, the first bent portion is bent relative to the first connecting portion and the third connecting portion, one end of the first connecting portion in the first direction is connected to the first exposed portion, the other end of the first connecting portion in the first direction is connected to one end of the first bent portion, the other end of the first bent portion is connected to one end of the third connecting portion in the first direction, and the third connecting portion extends parallel to the first connecting portion.

The first connecting portion and the third connecting portion can be connected through the first bent portion to form a substantially U-shaped structure, helping to keep the first connecting portion and the third connecting portion to each have a connecting surface extending along the first direction, facilitating surface connections with a positive electrode tab and a negative electrode tab that are not bent, and achieving more reliable series connection or parallel connection between the electrode assemblies, thereby improving the reliability of the battery.

In some embodiments, the first connecting portion is connected to the third connecting portion through a first bent portion, the first bent portion is bent relative to the first connecting portion and the third connecting portion, one end of the first connecting portion in the first direction is connected to the first exposed portion, the other end of the first connecting portion in the first direction is connected to one end of the first bent portion, the other end of the first bent portion is connected to one end of the third connecting portion in the first direction, and the third connecting portion extends parallel to the first connecting portion. The second connecting portion and the fourth connecting portion are connected through a second bent portion, the second bent portion is bent relative to the second connecting portion and the fourth connecting portion, one end of the second connecting portion in the first direction is connected to the second exposed portion, the other end of the second connecting portion in the first direction is connected to one end of the second bent portion, the other end of the second bent portion is connected to one end of the fourth connecting portion in the first direction, and the fourth connecting portion extends parallel to the second connecting portion.

The first connecting portion and the third connecting portion can be connected through the first bent portion to form a substantially U-shaped structure; and the second connecting portion and the fourth connecting portion can be connected through the second bent portion to form a substantially U-shaped structure, helping to keep each connecting portion to have a connecting surface extending along the first direction, facilitating respective surface connections with a positive electrode tab and a negative electrode tab of an electrode assembly that are not bent, and achieving more reliable parallel connection between the electrode assemblies, thereby improving the reliability of the battery.

In some embodiments, an insulating blocking member is provided between the second connecting portions of two adjacent second connecting members.

The insulating blocking member can block the positive electrode tab and the negative electrode tab connected to the connecting surfaces of the two second connecting portions, preventing short circuit caused by series connection and improving the reliability of the battery.

In some embodiments, the first exposed portion and the first connecting portion are connected through a first overcurrent bottleneck portion; and/or the second exposed portion and the second connecting portion are connected through a second overcurrent bottleneck portion.

The first overcurrent bottleneck portion and the second overcurrent bottleneck portion are respectively configured to be fused when a current passing through the first connecting member and the second connecting member is too large (reaching a current bottleneck), to respectively disconnect the first exposed portion from the first connecting portion and disconnect the second exposed portion from the second connecting portion, thereby preventing the spread of excessive current to the respective electrode assemblies, reducing the risk of thermal runaway, and improving the reliability of the battery.

In some embodiments, a cross-sectional area of the first overcurrent bottleneck portion is smaller than a cross-sectional area of the first connecting portion; and a cross-sectional area of the second overcurrent bottleneck portion is smaller than a cross-sectional area of the second connecting portion.

The cross-sectional area of the first overcurrent bottleneck portion is smaller than the cross-sectional area of the first connecting portion, so that when the current passing through the first connecting member is too large (reaching the current bottleneck), the first overcurrent bottleneck portion is fused preferentially as compared to the first connecting portion, to disconnect the first exposed portion from the first connecting portion. The cross-sectional area of the second overcurrent bottleneck portion is smaller than the cross-sectional area of the second connecting portion, so that when the current passing through the second connecting member is too large (reaching the current bottleneck), the second overcurrent bottleneck portion is fused preferentially as compared to the second connecting portion, to disconnect the second exposed portion from the second connecting portion. This prevents the spread of excessive current to the electrode assembly, reduces the risk of thermal runaway, and improves the reliability of the battery.

In some embodiments, the first connecting member and the second connecting member are respectively injection-molded with the top cover body.

The first connecting member and the second connecting member form an integrated injection-molded structure with the top cover body, achieving more stable connection, thereby improving the reliability of the battery. Moreover, the integrally formed structure is conducive to improving the production efficiency.

According to a second aspect, this disclosure provides a top cover assembly, including: a top cover body; as well as a first connecting member and a second connecting member that are conductive and provided on the top cover body. The first connecting member includes a first connecting portion and a first exposed portion connected to the first connecting portion. The second connecting member includes a second connecting portion and a second exposed portion connected to the second connecting portion. The first connecting portion and the second connecting portion each include a connecting surface extending along a first direction, and the first exposed portion and the second exposed portion are exposed outside the housing. The connecting surface of the first connecting portion is configured to be in surface connection with a positive electrode tab or a negative electrode tab of an electrode assembly, and the connecting surface of the second connecting portion is configured to be in surface connection with the positive electrode tab or the negative electrode tab. The connecting surface of the first connecting portion and the connecting surface of the second connecting portion extend along the same direction as extension directions of the positive electrode tab and the negative electrode tab.

Since the connecting surface of the first connecting portion, the connecting surface of the second connecting portion, and the positive electrode tab and negative electrode tab of the electrode assembly all extend along the first direction, the positive electrode tab and negative electrode tab of the electrode assembly can respectively achieve non-bending connection with the connecting surface of the first connecting portion and the connecting surface of the second connecting portion, thereby reducing the risk of fracture of the positive electrode tab and negative electrode tab, achieving more stable connection, and improving the reliability of the battery.

In some embodiments, the first connecting portion and the first exposed portion are connected in a bent manner; and the second connecting portion and the second exposed portion are connected in a bent manner.

Since the first connecting portion and the first exposed portion are connected in a bent manner, and the second connecting portion and the second exposed portion are connected in a bent manner, space occupation is reduced, and more space is provided for battery grouping.

In some embodiments, the first exposed portion and the second exposed portion are both parallel to a top surface of the top cover body.

Making the first exposed portion and the second exposed portion both parallel to the top surface of the top cover body not only reduces space occupation but also facilitates connection of busbar components, thereby improving the battery grouping efficiency.

In some embodiments, the first connecting member and the second connecting member are arranged side by side along a second direction on the top cover body; and/or the first connecting member and the second connecting member are arranged side by side along a third direction on the top cover body; where the first direction, the second direction, and the third direction are perpendicular to each other.

By being arranged side by side, the first connecting member and the second connecting member can be conveniently connected to the positive electrode tab and the negative electrode tab, improving the battery manufacturing efficiency. The first connecting member and the second connecting member may be arranged side by side in pairs in any of the second direction or the third direction, to adapt to positions of tabs of electrode assemblies of different specifications/types, achieving wide adaptability.

In some embodiments, the first connecting member further includes a third connecting portion connected to the first connecting portion, the third connecting portion includes a connecting surface extending along the first direction, and the number of the second connecting members is an even number.

By making the first connecting member have the connecting surface of the first connecting portion and the connecting surface of the third connecting portion, the first connecting member can be connected to two tabs, and by cooperation with an even number of second connecting members, a connection of the top cover assembly to multiple electrode assemblies can be easily implemented, and a parallel connection or serial connection between multiple electrode assemblies is also facilitated.

At least two electrode assemblies without bent tabs can be connected in series or parallel through one top cover, improving the connection reliability and battery grouping efficiency.

In some embodiments, the first connecting member further includes a third connecting portion connected to the first connecting portion, and the third connecting portion includes a connecting surface extending along the first direction. The second connecting member further includes a fourth connecting portion connected to the second connecting portion, and the fourth connecting portion includes a connecting surface extending along the first direction.

By making the first connecting member have the connecting surface of the first connecting portion and the connecting surface of the third connecting portion, and making the second connecting member have the connecting surface of the second connecting portion and the connecting surface of the fourth connecting portion, the first connecting member and the second connecting member can each be connected to two tabs, so that a connection of the top cover assembly to multiple electrode assemblies can be easily implemented, and a parallel connection between multiple electrode assemblies is also facilitated. At least two electrode assemblies without bent tabs are connected in parallel through one top cover, improving the connection reliability and battery grouping efficiency.

In some embodiments, the first connecting portion and the third connecting portion are connected through the first bent portion, the first bent portion is bent relative to the first connecting portion and the third connecting portion, one end of the first connecting portion in the first direction is connected to the first exposed portion, the other end of the first connecting portion in the first direction is connected to one end of the first bent portion, the other end of the first bent portion is connected to one end of the third connecting portion in the first direction, and the third connecting portion extends parallel to the first connecting portion.

The first connecting portion and the third connecting portion can be connected through the first bent portion to form a substantially U-shaped structure, helping to keep the first connecting portion and the third connecting portion to each have a connecting surface extending along the first direction, facilitating surface connections with a positive electrode tab and a negative electrode tab that are not bent, and achieving more reliable series or parallel connection between the electrode assemblies, thereby improving the reliability of the battery.

In some embodiments, the first connecting portion is connected to the third connecting portion through a first bent portion, the first bent portion is bent relative to the first connecting portion and the third connecting portion, one end of the first connecting portion in the first direction is connected to the first exposed portion, the other end of the first connecting portion in the first direction is connected to one end of the first bent portion, the other end of the first bent portion is connected to one end of the third connecting portion in the first direction, and the third connecting portion extends parallel to the first connecting portion. The second connecting portion and the fourth connecting portion are connected through a second bent portion, the second bent portion is bent relative to the second connecting portion and the fourth connecting portion, one end of the second connecting portion in the first direction is connected to the second exposed portion, the other end of the second connecting portion in the first direction is connected to one end of the second bent portion, the other end of the second bent portion is connected to one end of the fourth connecting portion in the first direction, and the fourth connecting portion extends parallel to the second connecting portion.

The first connecting portion and the third connecting portion can be connected through the first bent portion to form a substantially U-shaped structure; and the second connecting portion and the fourth connecting portion can be connected through the second bent portion to form a substantially U-shaped structure, helping to keep each connecting portion to have a connecting surface extending along the first direction, facilitating respective surface connections with a positive electrode tab and a negative electrode tab of an electrode assembly that are not bent, and achieving more reliable parallel connection between the electrode assemblies, thereby improving the reliability of the battery.

In some embodiments, an insulating blocking member is provided between the second connecting portions of two adjacent second connecting members.

The insulating blocking member can block the positive electrode tab and the negative electrode tab connected to the connecting surfaces of the two second connecting portions, preventing short circuit caused by series connection and improving the reliability of the battery.

In some embodiments, the first exposed portion and the first connecting portion are connected through a first overcurrent bottleneck portion; and/or the second exposed portion and the second connecting portion are connected through a second overcurrent bottleneck portion.

The first overcurrent bottleneck portion and the second overcurrent bottleneck portion are respectively configured to be fused when a current passing through the first connecting member and the second connecting member is too large (reaching a current bottleneck), to respectively disconnect the first exposed portion from the first connecting portion and disconnect the second exposed portion from the second connecting portion, thereby preventing the spread of excessive current to the respective electrode assemblies, reducing the risk of thermal runaway, and improving the reliability of the battery.

In some embodiments, a cross-sectional area of the first overcurrent bottleneck portion is smaller than a cross-sectional area of the first connecting portion; and a cross-sectional area of the second overcurrent bottleneck portion is smaller than a cross-sectional area of the second connecting portion.

The cross-sectional area of the first overcurrent bottleneck portion is smaller than the cross-sectional area of the first connecting portion, so that when the current passing through the first connecting member is too large (reaching the current bottleneck), the first overcurrent bottleneck portion is fused preferentially as compared to the first connecting portion, to disconnect the first exposed portion from the first connecting portion. The cross-sectional area of the second overcurrent bottleneck portion is smaller than the cross-sectional area of the second connecting portion, so that when the current passing through the second connecting member is too large (reaching the current bottleneck), the second overcurrent bottleneck portion is fused preferentially as compared to the second connecting portion, to disconnect the second exposed portion from the second connecting portion. This prevents the spread of excessive current to the electrode assembly, reduces the risk of thermal runaway, and improves the reliability of the battery.

In some embodiments, the first connecting member and the second connecting member are respectively injection-molded with the top cover body.

The first connecting member and the second connecting member form an integrated injection-molded structure with the top cover body, achieving more stable connection, thereby improving the reliability of the battery. Moreover, the integrally formed structure is conducive to improving the production efficiency.

According to a third aspect, this disclosure provides a battery pack, including: at least one battery; and at least one busbar component that is electrically connected to a first exposed portion and a second exposed portion so as to connect the batteries in series and/or in parallel.

In the battery provided by this embodiment of this disclosure, since the tab can be connected to the connecting member without bending, the risk of fracture of the tab is reduced, and thus the reliability of the battery or even the battery pack can be improved.

In some embodiments, the top cover assemblies of adjacent batteries are connected to each other, and each top cover assembly closes the opening of the corresponding housing.

The batteries can first be connected to the top cover assemblies through tabs, and then grouped through their respective top cover assemblies to form a battery pack. This, as compared to a traditional method in which the batteries are first grouped and then the tabs are connected to the connecting members, facilitates the connection of the tabs to the connecting members, and achieves higher connection reliability. In addition, the batteries can be easily added or reduced as needed.

In some embodiments, in two adjacent top cover assemblies, one top cover assembly is provided with a snap protrusion, and the other top cover assembly is provided with a snap groove. The top cover assemblies of adjacent batteries are connected to each other through snap fit of the snap protrusion and the snap groove.

Multiple batteries are grouped to form a battery pack through snap fit of the snap protrusion and the snap groove of the top cover assemblies of adjacent batteries, improving the grouping efficiency.

According to a fourth aspect, this disclosure provides an electric apparatus, including a battery or battery pack for providing electrical energy.

According to a fifth aspect, this disclosure provides an energy storage apparatus, including a battery or a battery pack, where the battery is capable of storing electrical energy and providing electrical energy.

According to a sixth aspect, this disclosure provides a battery manufacturing method, including: a top cover assembly forming step: forming a first connecting member and a second connecting member that are conductive on a top cover body to form an integrated top cover assembly, where the first connecting member includes a first connecting portion and a first exposed portion connected to the first connecting portion, and the second connecting member includes a second connecting portion and a second exposed portion connected to the second connecting portion;
a tab connecting step: making one of a connecting surface of the first connecting portion and a connecting surface of the second connecting portion of the top cover assembly be in surface connection with a positive electrode tab or negative electrode tab of the electrode assembly, and making the other be in surface connection with the positive electrode tab or negative electrode tab of the electrode assembly that is not connected to the first connecting portion, where the positive electrode tab, the negative electrode tab, the connecting surface of the first connecting portion, and the connecting surface of the second connecting portion all extend along a first direction; and
an electrode assembly housing step: accommodating the electrode assembly connected to the top cover assembly into an accommodation space defined by a housing from an opening of the housing, and closing the opening through the top cover assembly, where the first exposed portion and the second exposed portion are exposed outside the housing.

In some embodiments, the top cover assembly forming step includes: performing injection molding on the first connecting member, the second connecting member, and the top cover body to form the integrated top cover assembly.

This disclosure can achieve non-bending connection of the tabs of the electrode assembly to the top cover assembly, reduce the risk of fracture of the tabs, and improves the reliability of the battery, the battery pack, or even the electric apparatus and the energy storage apparatus.

### DESCRIPTION OF DRAWINGS

By reading the detailed description of the following preferred embodiments, various other advantages and benefits will become clear to those of ordinary skill in the art. The drawings are only used to illustrate the preferred embodiments and are not construed as limiting this disclosure. Moreover, the same reference numerals are used to denote the same components in all the drawings. In the drawings:
FIG. 1 is a schematic structural diagram of a vehicle according to some embodiments of this disclosure;
FIG. 2 is a schematic structural diagram of a battery pack according to some embodiments of this disclosure;
FIG. 3 is a schematic structural diagram of a battery with a housing removed according to some embodiments of this disclosure;
FIG. 4 is a schematic structural diagram of a battery with a housing removed from another perspective according to some embodiments of this disclosure;
FIG. 5 is a three-dimensional schematic exploded view of a top cover assembly according to some embodiments of this disclosure;
FIG. 6 is a schematic structural diagram of a top cover assembly according to some other embodiments of this disclosure;
FIG. 7 is a three-dimensional schematic exploded view of a top cover assembly according to still some other embodiments of this disclosure;
FIG. 8 is a three-dimensional schematic diagram of a top cover assembly according to yet some other embodiments of this disclosure;
FIG. 9 is a schematic diagram of the top cover assembly in FIG. 8 from another perspective;
FIG. 10 is a three-dimensional schematic exploded view of the top cover assembly in FIG. 8;
FIG. 11 is a schematic structural diagram of a bottom surface of a top cover body according to some embodiments of this disclosure;
FIG. 12 is a schematic diagram of top cover assemblies connected in groups according to some embodiments of this disclosure; and
FIG. 13 is a flowchart of a battery manufacturing method according to some embodiments of this disclosure.

### Description of reference numerals

vehicle 1000; battery pack 100; controller 200; motor 300; battery 4; housing 10; top cover assembly 20; top cover body 21; snap step 211; snap protrusion 212; recess portion 213; first connecting member 22; first connecting portion 221; first exposed portion 222; third connecting portion 223; first bent portion 224; second bent portion 224; first overcurrent bottleneck portion 225; second connecting member 23; insulating blocking member 25; second connecting portion 231; second exposed portion 232; fourth connecting portion 241; electrode assembly 30; positive electrode tab 31; negative electrode tab 32; first direction X; second direction Y; and third direction Z.

### DESCRIPTION OF EMBODIMENTS

The embodiments of the technical solutions of this disclosure are described in detail below in conjunction with the drawings. The following embodiments are only used to illustrate the technical solutions of this disclosure more clearly, and thus are only used as examples and cannot be used to limit the protection scope of this disclosure.

Unless otherwise defined, all technical and scientific terms used herein have the same meanings as commonly understood by those skilled in the technical field to which this disclosure belongs. The terms used herein are only for the purpose of describing specific embodiments and are not intended to limit this disclosure. The terms "include", "comprise", and any variations thereof in the specification and claims of this disclosure and the above description of the drawings are intended to cover non-exclusive inclusion.

In the description of the embodiments of this disclosure, the technical terms "first", "second", "third", "fourth", "fifth", and the like are only used to distinguish different objects and should not be understood as indicating or implying relative importance or implicitly indicating the number, specific sequence, or primary-secondary relationship of the indicated technical features. In the description of the embodiments of this disclosure, "multiple" means two or more, unless otherwise clearly and specifically limited.

The reference to "embodiment" herein means that a particular feature, structure, or characteristic described in conjunction with this embodiment can be included in at least one embodiment of this disclosure. The appearance of this phrase in various places in the specification does not necessarily refer to the same embodiment, nor is it an independent or alternative embodiment that is mutually exclusive with other embodiments. Those skilled in the art explicitly and implicitly understand that the embodiments described herein can be combined with other embodiments.

In the description of the embodiments of this disclosure, the term "and/or" merely refers to an association relationship for describing associated objects, indicating that three relationships can exist. For example, A and/or B can indicate: only A exists, both A and B exist, and only B exists. In addition, the character "/" herein generally indicates that the contextually associated objects are in an "or" relationship.

In the description of the embodiments of this disclosure, the orientation or positional relationship indicated by the technical terms "length", "width", "thickness", "upper", "lower", "front", "rear", "left", "right", "vertical", "horizontal", "top", "bottom", "inner", "outer", "circumferential", and the like is based on the orientation or positional relationship shown in the drawings, which is only for facilitating the description of the embodiments of this disclosure and simplifying the description, rather than for indicating or implying that the referred apparatus or element must have a specific orientation or be constructed and operated in a specific orientation, and therefore cannot be understood as limiting the embodiments of this disclosure.

In the description of the embodiments of this disclosure, unless otherwise clearly specified and limited, the technical term "mounting", "connection", "join", "fastening", or the like should be understood in a broad sense. For example, it may be a fixed connection, a detachable connection, or an integral connection; it may be a mechanical connection or an electrical connection; it may be a direct connection or an indirect connection through an intermediate medium; and it may be an internal communication between two elements or an interaction relationship between two elements. For those of ordinary skill in the art, the specific meanings of the above terms in the embodiments of this disclosure can be understood according to specific circumstances.

In the description of the embodiments of this disclosure, unless otherwise clearly specified and limited, the technical term "contact" should be understood in a broad sense, which may be direct contact or indirect contact through an intermediate medium layer, may be contact basically with no interaction force between two objects in contact, or may be contact with an interaction force between two objects in contact.

The following provides a detailed description of this disclosure.

At present, the application of new energy batteries in life and industry is becoming more and more widespread. New energy batteries are not only used in energy storage power systems such as hydraulic, thermal, wind, and solar power stations, but also widely used in electric transportation tools such as electric bicycles, electric motorcycles, and electric vehicles, as well as in various fields such as aircraft. With the continuous expansion of the application field of traction batteries, the market demand thereof is also continuously increasing.

In a battery manufacturing process, sometimes multiple electrode assemblies need to be electrically connected in groups. In the related art, after tabs of electrode assemblies of multiple batteries are connected to each other in groups, the tabs are connected to a connecting member (such as a bus bar) of a top cover assembly, and then are further connected to a connecting member through busbar components, so that the batteries are further connected in groups. The tabs of the multiple electrode assemblies are usually welded to the connecting member of the top cover assembly in a bent state (for example, being bent for 90 degrees). Stress concentration at a bent position of the tab easily causes a fracture risk, and overlapping between a bent part and the connecting member easily results in formation of a gap, leading to false welding, thereby causing the problem of unreliable connection between the tab and the connecting member.

In view of this, this disclosure provides a battery, where a connecting member connected to a tab is designed on a top cover assembly, and the connecting member has a connecting surface extending along the same direction as an extension direction of the tab, thereby achieving a non-bending surface connection between the tab and the connecting surface.

Based on this design concept, this disclosure provides a battery, including: a housing, a top cover assembly, and at least one electrode assembly. The housing defines an accommodation space and has an opening on one side. The top cover assembly is provided on the housing and closes the opening. The top cover assembly includes a top cover body as well as a first connecting member and a second connecting member that are conductive and provided on the top cover body. The first connecting member includes a first connecting portion and a first exposed portion connected to the first connecting portion, and the second connecting member includes a second connecting portion and a second exposed portion connected to the second connecting portion. The first connecting portion and the second connecting portion each include a connecting surface extending along a first direction. The first exposed portion and the second exposed portion are exposed outside the housing. The electrode assembly is accommodated in the accommodation space defined by the housing. The electrode assembly includes a positive electrode tab and a negative electrode tab extending along the first direction. The connecting surface of the first connecting portion is in surface connection with the positive electrode tab or the negative electrode tab, and the connecting surface of the second connecting portion is in surface connection with the positive electrode tab or the negative electrode tab that is not connected to the first connecting portion.

The respective connecting surfaces of the first connecting member and the second connecting member extend along the same direction as the extension directions of the positive electrode tab and the negative electrode tab, both extending along the first direction. Therefore, the positive electrode tab and the negative electrode tab can respectively achieve non-bending connection with the first connecting member and the second connecting member, reducing the risk of fracture of the tabs, and reducing gaps between the tabs (the positive electrode tab and negative electrode tab) and the connecting surfaces of the connecting portions (the first connecting portion and second connecting portion), thereby achieving more reliable welding and improving the battery.

The battery provided by this embodiment of this disclosure may be but is not limited to be used in electric apparatuses such as energy storage power systems, vehicles, ships, or aircraft. Since the tabs of the battery in this embodiment of this disclosure can achieve non-bending connection, the risk of fracture of the tabs is reduced, and thus the reliability of the electric apparatuses can be improved.

Multiple batteries provided by this embodiment of this disclosure may be grouped as a battery pack for use. The battery pack may also be but is not limited to be used in electric apparatuses such as energy storage power systems, vehicles, ships, or aircraft.

An embodiment of this disclosure provides an electric apparatus including the above battery or battery pack for providing electrical energy, and the electric apparatus may be but is not limited to mobile phones, tablets, notebook computers, electric toys, electric tools, electric bicycles, electric vehicles, ships, and aircraft. Electric toys may include fixed or mobile electric toys, such as game consoles, electric toy cars, electric toy ships, and electric toy airplanes. Aircraft may include airplanes, rockets, space shuttles, spaceships, and the like.

In the following embodiments, for convenience of description, an electric apparatus according to an embodiment of this disclosure being a vehicle 1000 is as an example for description. The following provides the description in conjunction with the drawings.

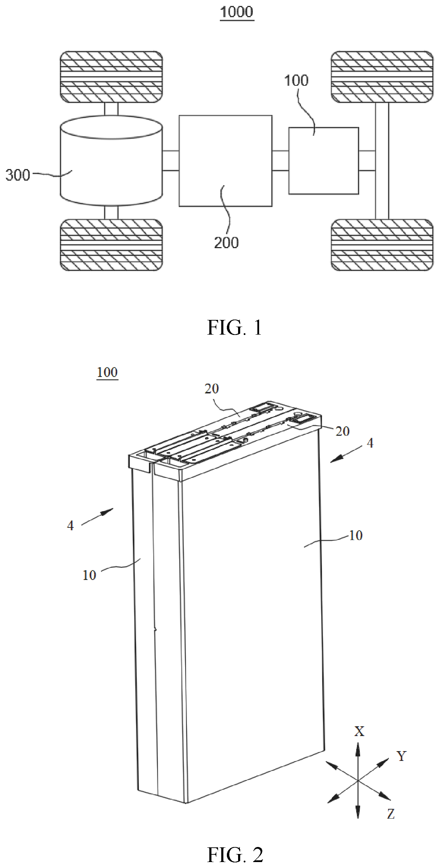

FIG. 1 is a schematic structural diagram of a vehicle 1000 according to some embodiments of this disclosure. The vehicle 1000 may be a fuel vehicle, a gas vehicle, or a new energy vehicle, and the new energy vehicle may be a battery electric vehicle, a hybrid vehicle, an extended-range vehicle, or the like. As shown in FIG. 1, a battery pack 100 is provided inside the vehicle 1000, and the battery pack 100 may be disposed at the bottom, front, or rear of the vehicle 1000. The battery pack 100 may be configured to supply power to the vehicle 1000. For example, the battery pack 100 may serve as an operating power source of the vehicle 1000. The vehicle 1000 may alternatively include a controller 200 and a motor 300. The controller 200 is configured to control the battery pack 100 to supply power to the motor 300, for example, for the operating power needs for starting, navigation, and running of the vehicle 1000.

In some embodiments of this disclosure, the battery pack 100 can not only serve as an operating power source of the vehicle 1000, but also serve as a driving power source of the vehicle 1000, replacing or partially replacing fuel or natural gas to provide driving power for the vehicle 1000.

FIG. 2 is a schematic structural diagram of a battery pack 100 according to an embodiment of this disclosure. As shown in FIG. 2, the battery pack 100 includes at least one battery 4. The battery pack may further include a box (not shown in the figure), and at least one battery 4 is accommodated in an accommodation space formed by the box. There may be multiple batteries 4, and the multiple batteries 4 may be connected in series, parallel, or series-parallel, where being connected in series-parallel means that there are both series connection and parallel connection between the multiple batteries 4. The multiple batteries 4 may be directly connected in series, parallel, or series-parallel with each other, and then the entirety formed by the multiple batteries 4 is placed in the accommodation space formed by the box. Certainly, the battery pack 100 may alternatively formed in a manner that multiple batteries 4 are first connected in series, parallel, or series-parallel to form a battery module, and then multiple battery modules are connected in series, parallel, or series-parallel to form an entirety that is accommodated in the accommodation space formed by the box. The battery pack 100 may further include other structures, for example, the battery pack 100 may further include a busbar component for achieving an electrical connection between the multiple batteries 4.

In this embodiment of this disclosure, the battery may be a secondary battery, and the secondary battery refers to a battery that can continue to be used by activating the active material through charging after the battery is discharged.

The battery may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like, which is not limited in this embodiment of this disclosure.

A battery generally includes an electrode assembly. The electrode assembly includes a positive electrode, a negative electrode, and a separator. During charging and discharging processes of the battery, active ions (such as lithium ions) are intercalated and deintercalated back and forth between the positive electrode and the negative electrode. The separator is provided between the positive electrode and the negative electrode to prevent short circuit between the positive and negative electrodes, as well as to allow active ions to pass through.

In some embodiments, the positive electrode may be a positive electrode sheet, and the positive electrode sheet may include a positive electrode current collector and a positive electrode active material provided on at least one surface of the positive electrode current collector.

In an example, the positive electrode current collector has two opposite surfaces in its thickness direction, and the positive electrode active material is provided on either or both of the two opposite surfaces of the positive electrode current collector.

In an example, a metal foil or a composite current collector may be used as the positive electrode current collector. For example, as the metal foil, aluminum or stainless steel subjected to a surface treatment with silver, stainless steel, copper, aluminum, nickel, carbon electrode, carbon, nickel, titanium, or the like may be used. The composite current collector may include a polymer material substrate and a metal layer. The composite current collector can be formed by forming a metal material (aluminum, aluminum alloy, nickel, nickel alloy, titanium, titanium alloy, silver, silver alloy, and the like) on a polymer material substrate (such as a substrate of polypropylene, polyethylene terephthalate, polybutylene terephthalate, polystyrene, and polyethylene).

In an example, the positive electrode active material may include at least one of the following materials: lithium-containing phosphate, lithium transition metal oxide, and respective modified compounds thereof. However, this disclosure is not limited to these materials, and other conventional materials that can be used as positive electrode active materials for batteries can also be used. These positive electrode active materials may be used alone, or two or more of them are combined for use. Examples of the lithium-containing phosphate may include but is not limited to at least one of lithium iron phosphate (such as LiFePO₄ (also abbreviated as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

In some embodiments, the positive electrode may be foam metal. The foam metal may be foam nickel, foam copper, foam aluminum, foam alloy, foam carbon, or the like. When foam metal is used as the positive electrode, a surface of the foam metal may be not provided with a positive electrode active material, and certainly may be provided with a positive electrode active material. In an example, a lithium source material, potassium metal, or sodium metal may fill or/and deposit in the foam metal, and the lithium source material is lithium metal and/or a lithium-rich material.

In some embodiments, the negative electrode may be a negative electrode sheet, and the negative electrode sheet may include a negative electrode current collector.

In an example, the negative electrode current collector may be a metal foil, foam metal, or a composite current collector. For example, as the metal foil, aluminum or stainless steel subjected to a surface treatment with silver, stainless steel, copper, aluminum, nickel, carbon electrode, carbon, nickel, titanium, or the like can be used. The composite current collector may include a polymer material substrate and a metal layer. The foam metal may be foam nickel, foam copper, foam aluminum, foam alloy, foam carbon, or the like. The composite current collector can be formed by forming a metal material (copper, copper alloy, nickel, nickel alloy, titanium, titanium alloy, silver, silver alloy, and the like) on a polymer material substrate (such as a substrate of polypropylene, polyethylene terephthalate, polybutylene terephthalate, polystyrene, and polyethylene). In some embodiments, the positive electrode current collector may be made of aluminum, and the negative electrode current collector may be made of copper.

In an example, the negative electrode current collector has two opposite surfaces in its thickness direction, and the negative electrode active material is provided on either or both of the two opposite surfaces of the negative electrode current collector.

In an example, the negative electrode active material may adopt a negative electrode active material well known in the art for battery cells. In an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and silicon alloy. The tin-based material may be selected from at least one of elemental tin, a tin-oxygen compound, and tin alloy. However, this application is not limited to these materials, and other conventional materials that can be used as negative electrode active materials for battery cells can also be used. These negative electrode active materials may be used alone, or two or more of them are combined for use.

In some embodiments, the electrode assembly further includes a separator, where the separator is provided between the positive electrode and the negative electrode.

In some embodiments, the separator is a separator film. This disclosure has no particular limitation on a type of the separator film, and any well-known porous structure separator film with good chemical stability and mechanical stability can be selected.

In an example, a main material of the separator film may be at least one selected from glass fiber, non-woven fabric, polyethylene, polypropylene, polyvinylidene fluoride, and ceramic.

In some embodiments, the separator is a solid electrolyte. The solid electrolyte is provided between the positive electrode and the negative electrode, and plays a role of transporting ions and isolating the positive and negative electrodes.

In some embodiments, the battery cell further includes an electrolyte, and the electrolyte plays a role of conducting ions between the positive and negative electrodes. This disclosure has no specific limitation on a type of electrolyte, which can be selected according to needs. The electrolyte may be liquid, gel, or solid.

In some embodiments, the electrode assembly is a wound structure. The positive electrode sheet and the negative electrode sheet are wound into a wound structure.

In some embodiments, the electrode assembly is a stacked structure.

In an example, multiple positive electrode sheets and multiple negative electrode sheets may be provided respectively, and the multiple positive electrode sheets and the multiple negative electrode sheets are alternately stacked.

In an example, multiple positive electrode sheets may be provided, and a negative electrode sheet is folded to form multiple folded sections that are stacked, with a positive electrode sheet sandwiched between adjacent folded sections.

In an example, a positive electrode sheet and a negative electrode sheet are each folded to form multiple folded sections that are stacked.

In an example, multiple separators may be provided, which are respectively provided between any adjacent positive electrode sheets or negative electrode sheets.

In an example, the separator may be continuously provided, which is provided between any adjacent positive electrode sheets or negative electrode sheets by folding or winding.

In some embodiments, the electrode assembly may be in a cylindrical shape, a flat shape, a multi-prism shape, or the like.

In some embodiments, the electrode assembly is provided with tabs, and the tabs can lead current out of the electrode assembly. The tabs include a positive electrode tab and a negative electrode tab.

In some embodiments, the battery may include a housing. The housing is configured to accommodate components such as the electrode assembly and an electrolyte. The housing may be a steel housing, an aluminum housing, a plastic housing (such as polypropylene), a composite metal housing (such as a copper-aluminum composite housing), an aluminum-plastic film, or the like.

In an example, the battery may be a cylindrical battery, a prismatic battery, a pouch battery, or a battery of other shapes. The prismatic battery includes a square-shell battery, a blade-shaped battery, and a multi-prism battery. The multi-prism battery is, for example, a hexagonal prism battery. This disclosure has no particular limitation.

In some embodiments, the housing is provided with an opening, and an end cover closes the opening to form a sealed space for accommodating substances such as the electrode assembly and the electrolyte. The housing may be provided with one or more openings. There may be one or more end covers as well.

In some embodiments, at least one electrode terminal is provided on the housing, and the electrode terminal is electrically connected to the tab. The electrode terminal may be directly connected to the tab, or indirectly connected to the tab through an adapter component. The electrode terminal may be provided on the end cover or on the housing.

In some embodiments, a pressure relief mechanism is provided on the end cover. The pressure relief mechanism is configured to release the internal pressure of a battery cell.

An embodiment of this disclosure further provides a battery pack including one or more batteries to provide a single physical module with higher voltage and capacity. When there are multiple batteries, the multiple batteries are connected in series, parallel, or series-parallel through busbar components.

In some embodiments, the battery pack includes a box and a battery, where the battery is accommodated in the box.

In some embodiments, the box may be a part of a chassis structure of a vehicle. For example, a part of the box may become at least a part of a floor of the vehicle, or a part of the box may become at least a part of cross beams and longitudinal beams of the vehicle.

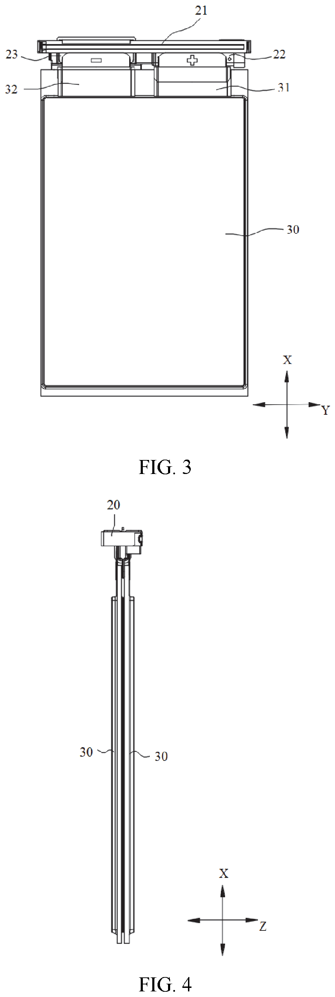

The following provides a detailed description of some embodiments of this disclosure with reference to FIG. 2 to FIG. 12.

An embodiment of this disclosure provides a battery 4, including: a housing 10, a top cover assembly 20, and an electrode assembly 30. The housing 10 defines an accommodation space and has an opening on one side. The top cover assembly 20 is provided on the housing 10 and closes the opening. The top cover assembly 20 includes a top cover body 21, as well as a first connecting member 22 and a second connecting member 23 that are conductive and provided on the top cover body 21. The first connecting member 22 includes a first connecting portion 221 and a first exposed portion 222 connected to the first connecting portion 221, and the second connecting member 23 includes a second connecting portion 231 and a second exposed portion 232 connected to the second connecting portion 231. The first connecting portion 221 and the second connecting portion 231 each include a connecting surface extending along a first direction X, and the first exposed portion 222 and the second exposed portion 232 are exposed outside the housing 10. The electrode assembly 30 is accommodated in the accommodation space, and the electrode assembly 30 includes a positive electrode tab 31 and a negative electrode tab 32 extending along the first direction X. The connecting surface 221a of the first connecting portion 221 is in surface connection with the positive electrode tab 31 or the negative electrode tab 32, and the connecting surface 231a of the second connecting portion 231 is in surface connection with the positive electrode tab 31 or the negative electrode tab 32 that is not connected to the first connecting portion 221.

The housing 10 may be a rigid housing or a flexible housing. The housing 10 may have various shapes depending on the structure of the electrode assembly 30. For example, the housing 10 may be in a circular shape, a square shape, a multi-prism shape, or other shapes.

The top cover assembly 20 is provided on the housing 10 and closes the opening to seal the electrode assembly 30 in the accommodation space defined by the housing 10.

The first connecting member 22 and the second connecting member 23 may be made of a conductive metal material. The metal material may be, for example, copper, aluminum, steel, or copper-aluminum alloy. The first connecting portion 221 of the first connecting member 22 and the second connecting portion 231 of the second connecting member 23 are respectively configured to be connected to one and the other of the positive electrode tab 31 and the negative electrode tab 32 of the electrode assembly 30. The first exposed portion 222 of the first connecting member 22 and the second exposed portion 232 of the second connecting member 23 are exposed outside the housing 10 to be connected to external busbar components, to achieve an electrical connection between multiple batteries 4, such as series connection, parallel connection, or series-parallel connection. The first connecting member 22 and the second connecting member 23 can sometimes be referred to as bus bars or adapter pieces.

The connecting surface of the first connecting portion 221 is in surface connection with the positive electrode tab 31 or the negative electrode tab 32, and the connecting surface of the second connecting portion 231 is in surface connection with the positive electrode tab 31 and the negative electrode tab 32 that are not connected to the first connecting portion 221. Optionally, the connecting surface of the first connecting portion 221 may be connected to the positive electrode tab 31, and the connecting surface of the second connecting portion 231 may be connected to the negative electrode tab 32. Alternatively, the connecting surface of the first connecting portion 221 is connected to the negative electrode tab 32, and the connecting surface of the second connecting portion 231 is connected to the positive electrode tab 31.

The electrode assembly 30 includes a positive electrode sheet and a negative electrode sheet that are stacked. The positive electrode sheet includes a positive electrode current collector and a positive electrode lead-out portion connected to an end portion of the positive electrode current collector, and the positive electrode lead-out portion serves as the positive electrode tab. The negative electrode sheet includes a negative electrode current collector and a negative electrode lead-out portion connected to an end portion of the negative electrode current collector, and the negative electrode lead-out portion serves as the negative electrode tab. Alternatively, the positive electrode lead-out portion is connected to a positive electrode adapter, so that the positive electrode lead-out portion and the positive electrode adapter together constitute the positive electrode tab. The negative electrode lead-out portion is connected to a negative electrode adapter, so that the negative electrode lead-out portion and the negative electrode adapter together constitute the negative electrode tab.

The so-called "surface connection" may be, for example, that the connecting surface 221a of the first connecting portion 221 and a surface of the positive electrode tab 31 have overlapping portions in a third direction Z (for example, a left-right direction shown in the figure) perpendicular to the first direction X, where non-bending connection is achieved between the overlapping portions, and a gap can be reduced. In some embodiments, the positive electrode tab 31 and the negative electrode tab 32 respectively extend out along the first direction X from the positive electrode sheet and the negative electrode sheet in the electrode assembly 30, and the extension portions are not bent. Such unbent positive electrode tab 31 and negative electrode tab 32 are respectively in surface connection with the connecting surface of the first connecting portion 221 and the connecting surface of the second connecting portion 231 by welding.

Since the connecting surface of the first connecting portion 221, the connecting surface of the second connecting portion 231, and the positive electrode tab 31 and negative electrode tab 32 of the electrode assembly 30 all extend along the first direction X (for example, an up-down direction shown in the figure), the positive electrode tab 31 and negative electrode tab 32 of the electrode assembly 30 respectively achieve non-bending surface connection with the connecting surface of the first connecting portion 221 and the connecting surface of the second connecting portion 231, reducing the risk of fracture of the positive electrode tab 31 and the negative electrode tab 32 and reducing the possibility of occurrence of gaps between the tabs (the positive electrode tab and negative electrode tab) and the connecting portions (the first connecting portion and second connecting portion), thereby reducing the risk of false welding, achieving more reliable connection, and improving the stability of the battery.

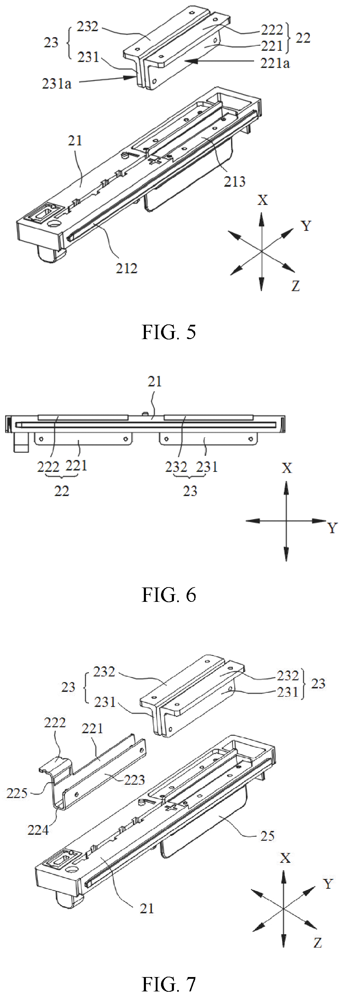

In some embodiments, as shown in FIG. 5, in the first connecting member 22, the first connecting portion 221 and the first exposed portion 222 are connected in a bent manner; and in the second connecting member 23, the second connecting portion 231 and the second exposed portion 232 are connected in a bent manner.

The first connecting portion 221 and the first exposed portion 222 are connected in a bent manner, which may mean that there is an included angle between the first connecting portion 221 and the first exposed portion 222. In an example, the first connecting portion 221 and the first exposed portion 222 are perpendicular to each other. The first connecting portion 221 and the first exposed portion 222 may be respectively located on two opposite sides of the top cover body 21 in the first direction X. For example, as shown in FIG. 5, the first connecting portion 221 is located below the top cover body 21, and the first exposed portion 222 is located above the top cover body 21. In addition, depending on a specific situation, the first connecting portion 221 and the first exposed portion 222 may alternatively be not bent.

The second connecting portion 231 and the second exposed portion 232 are connected in a bent manner, which may mean that there is an included angle between the second connecting portion 231 and the second exposed portion 232. In an example, the second connecting portion 231 and the second exposed portion 232 are perpendicular to each other. The second connecting portion 231 and the second exposed portion 232 may be respectively located on two opposite sides of the top cover body 21 in the first direction X. For example, as shown in FIG. 5, the second connecting portion 231 is located below the top cover body 21, and the second exposed portion 232 is located above the top cover body 21. In addition, depending on a specific situation, the second connecting portion 231 and the second exposed portion 232 may alternatively be not bent.

The bent structure herein may be achieved by bending. Certainly, it may alternatively be achieved by other suitable methods.

Since the first connecting portion 221 and the first exposed portion 222 are connected in a bent manner, and the second connecting portion 231 and the second exposed portion 232 are connected in a bent manner, space occupation of the first connecting member 22 and the second connecting member 23 in the battery is reduced, and more space is provided for battery grouping.

In some embodiments, the first exposed portion 222 and the second exposed portion 232 are both parallel to a top surface of the top cover body 21.

The first exposed portion 222 and the second exposed portion 232 may extend parallel to each other along the third direction Z perpendicular to the first direction X.

The first exposed portion 222 and the second exposed portion 232 may extend parallel to each other along the third direction Z, which may include a situation where the first exposed portion 222 and/or the second exposed portion 232 is substantially flush with the top surface of the top cover body 21, and also include a situation where a step difference is formed relative to the top cover body 21.

As shown in FIG. 5, in some embodiments, a recess portion 213 may be formed on the top surface of the top cover body 21, so that the first exposed portion 222 and the second exposed portion 232 are partially or fully recessed into the recess 213.

The first exposed portion 222 and the second exposed portion 232 are both parallel to the top surface of the top cover body 21, facilitating the connection through a busbar component, achieving series connection, parallel connection, or series-parallel connection between multiple batteries, and also helping to reduce space occupied by the first exposed portion 222, the second exposed portion 232, and the busbar component above the top cover body 21 (on a side away from the housing 10 along the first direction X).

In some embodiments, as shown in FIG. 6, the first connecting member 22 and the second connecting member 23 are arranged side by side along a second direction Y on the top cover body 21, and/or as shown in FIG. 5, the first connecting member 22 and the second connecting member 23 are arranged side by side along the third direction Z on the top cover body 21, where the first direction X, the second direction Y, and the third direction Z are perpendicular to each other.

In some embodiments, the first connecting member 22 and the second connecting member 23 are provided in pairs. Since each electrode assembly 30 includes two tabs (a positive electrode tab 31 and a negative electrode tab 32), each tab is correspondingly connected to one connecting member. In some embodiments, there is one electrode assembly 30, and the first connecting member 22 and the second connecting member 23 are respectively connected to the positive electrode tab 31 and the negative electrode tab 32 of the one electrode assembly 30. In some embodiments, there are multiple electrode assemblies 30, and each tab of each electrode assembly 30 is connected to one connecting member (the first connecting member 22 or the second connecting member 23). The paired first connecting member 22 and second connecting member 23 may be arranged side by side along the second direction Y on the top cover body 21, or arranged side by side along the third direction Z on the top cover body 21. An arrangement direction and arrangement positions of the first connecting member 22 and the second connecting member 23 can be set according to arrangement positions of the positive electrode tab 31 and the negative electrode tab 32 of the electrode assembly 30.

By being arranged side by side, the first connecting member 22 and the second connecting member 23 can be conveniently connected to the positive electrode tab 31 and the negative electrode tab 32, improving the battery manufacturing efficiency. The first connecting member 22 and the second connecting member 23 may be arranged side by side in pairs in any of the second direction Y or the third direction Z, to adapt to electrode assemblies of different specifications/types, achieving more flexible connection.

Referring to FIG. 6, a pair of first connecting member 22 and second connecting member 23 being arranged side by side along the second direction Y on the top cover body 21 is illustrated as an example. Referring to FIG. 5, a pair of first connecting member 22 and second connecting member 23 being arranged side by side along the third direction Z on the top cover body 21 is illustrated as an example.

In some embodiments, as shown in FIG. 7, the first connecting member 22 further includes a third connecting portion 223 connected to the first connecting portion 221, the third connecting portion 223 includes a connecting surface extending along the first direction X, and the number of the second connecting members 23 is an even number.

In the embodiments shown in FIG. 7, the connecting member including the first connecting portion 221 and the third connecting portion 223 is referred to as the first connecting member 22, and the connecting member including only the connecting portion and the exposed portion is referred to as the second connecting member 23. To be specific, in the example shown in FIG. 7, one first connecting member 22 and two second connecting members 23 are illustrated. Certainly, there may alternatively be two or more first connecting members 22 and 4, 6, or more pairs of second connecting members 23. Since the first connecting portion 221 of the first connecting member 22 is connected to the third connecting portion 223, one connecting member 22 can implement an electrical connection between two tabs.

In some embodiments, the battery 4 includes at least two electrode assemblies, the first connecting portion 221 of the first connecting member 22 is connected to the positive electrode tab 31 or the negative electrode tab 32 of one electrode assembly 30, the third connecting portion 223 of the first connecting member 22 is connected to the positive electrode tab 31 or the negative electrode tab 32 of another electrode assembly 30, and tabs in the electrode assemblies 30 that are not connected to the first connecting member 22 are respectively connected to the second connecting portion of the second connecting member 23.

The first connecting member 22 may be connected to two tabs, and each second connecting member 23 may be connected to one tab. For example, there are two second connecting members 2, where the first connecting portion 221 of the first connecting member 22 and the second connecting portion 231 of one second connecting member 23 are respectively connected to the positive electrode tab 31 and the negative electrode tab 32 of one electrode assembly 30, and the third connecting portion 223 and the second connecting portion 231 of the other second connecting member 23 are respectively connected to the negative electrode tab 32 and the positive electrode tab 31 of another electrode assembly 30, thereby forming series-connected electrode assemblies 30 (which are sometimes also referred to as "series electrode assembly body" hereinafter). In this case, a positive electrode terminal and a negative electrode terminal of the series electrode assembly body can be led out from the respective second exposed portions 232 of the two second connecting members 23 respectively.

In another example, there are two second connecting members 23, where the first connecting portion 221 of the first connecting member 22 and the second connecting portion 231 of one second connecting member 23 are respectively connected to the positive electrode tab 31 and the negative electrode tab 32 of one electrode assembly 30, and the third connecting portion 223 and the second connecting portion 231 of the other second connecting member 23 are respectively connected to the positive electrode tab 31 and the negative electrode tab 32 of another electrode assembly 30, thereby forming parallel-connected electrode assemblies 30 (which is sometimes also referred to as "parallel electrode assembly body" hereinafter). In this case, a positive electrode terminal and a negative electrode terminal of the parallel electrode assembly body can be led out from the second exposed portion of the first connecting member 22 and the second exposed portion 232 of any second connecting member 23 respectively. It should be noted that the two second connecting members 23 connected to tabs with the same polarity may be electrically connected through a busbar component and the like.

Thus, multiple electrode assemblies without bent tabs can be connected in series or parallel through one top cover assembly 20, improving the connection reliability, improving the series and parallel connection efficiency, and helping to reduce the number of parts and components in the battery.

In an example, one first connecting member 22 and two second connecting members 23 may constitute one connecting group, where each connecting group may connect two electrode assemblies in series or parallel. FIG. 7 illustrates an example in which one connecting group is provided on one top cover body 21 to connect two electrode assemblies in series or parallel. It can be understood that multiple connecting groups may alternatively be arranged side by side on one top cover body 21, thereby forming multiple series electrode assembly bodies or parallel electrode assembly bodies.

In some embodiments, referring to FIG. 7, the first exposed portion 222, the first connecting portion 221, and the third connecting portion 223 form an integrated structure. The integrated structure can be integrally formed with the top cover body 21 conveniently, reducing processing steps, and improving the connection reliability.

In some embodiments, referring to FIG. 7, the first connecting portion 221 and the third connecting portion 223 are connected through a first bent portion 224, the first bent portion 224 is bent relative to the first connecting portion 221 and the third connecting portion 223, one end of the first connecting portion 221 in the first direction X is connected to the first exposed portion 222, the other end of the first connecting portion 221 in the first direction X is connected to one end of the first bent portion 224, the other end of the first bent portion 224 is connected to one end of the third connecting portion 223 in the first direction X, and the third connecting portion 223 extends parallel to the first connecting portion 221.

The first connecting portion 221 and the third connecting portion 223 can be connected through the first bent portion 224 to form a substantially U-shaped integrated structure, where the integrated structure can be integrally formed with the top cover body 21 conveniently, reducing processing steps, and improving the connection reliability.

Optionally, the first exposed portion 222 can be formed to have the same length as the first connecting portion 221 in the second direction Y as shown in FIG. 5, or can be formed to be shorter than the first connecting portion 221 in the second direction Y as shown in FIG. 7.

In the case where the first exposed portion 222 is formed to be shorter than the first connecting portion 221, optionally, the first exposed portion 222 can be formed at one end portion of the first connecting portion 221 as shown in FIG. 7, or can be formed at a middle portion between two end portions of the first connecting portion 221 (not shown in the figure).

Optionally, the first connecting portion 221 can be provided on the top cover body 21 in an orientation where the first exposed portion 222 is located near one end portion of the top cover body 21 along the second direction Y as shown in FIG. 7, or can be provided on the top cover body 21 in an orientation where the first exposed portion 222 is located at a middle portion of the top cover body 21 along the second direction Y (not shown in the figure).

In some embodiments, referring to FIG. 7, the two second connecting members 23 are arranged side by side along the third direction Z, the first connecting member 22 and the second connecting member 23 are arranged side by side along the second direction Y, and a first electrode assembly and a second electrode assembly may be arranged side by side along the third direction Z. To be specific, the first connecting portion 221 of the first connecting member 22 and the second connecting member 23 that is on the same side with the first connecting portion 221 along the third direction Z are respectively connected to the positive electrode tab and the negative electrode tab of one electrode assembly (for example, the first electrode assembly); and the third connecting portion 223 of the first connecting member 22 and the second connecting member 23 that is on the same side with the third connecting portion 223 along the third direction Z are respectively connected to the positive electrode tab and the negative electrode tab of another electrode assembly (for example, the second electrode assembly).

In some embodiments, an insulating blocking member 25 is provided between the second connecting portions 231 of two adjacent second connecting members 23. The insulating blocking member 25 may be an independent component or a part of the top cover body 21.

The insulating blocking member 25 can block the positive electrode tab and the negative electrode tab connected to the connecting surfaces of two adjacent second connecting portions 231, preventing short circuit and improving the reliability of the battery.

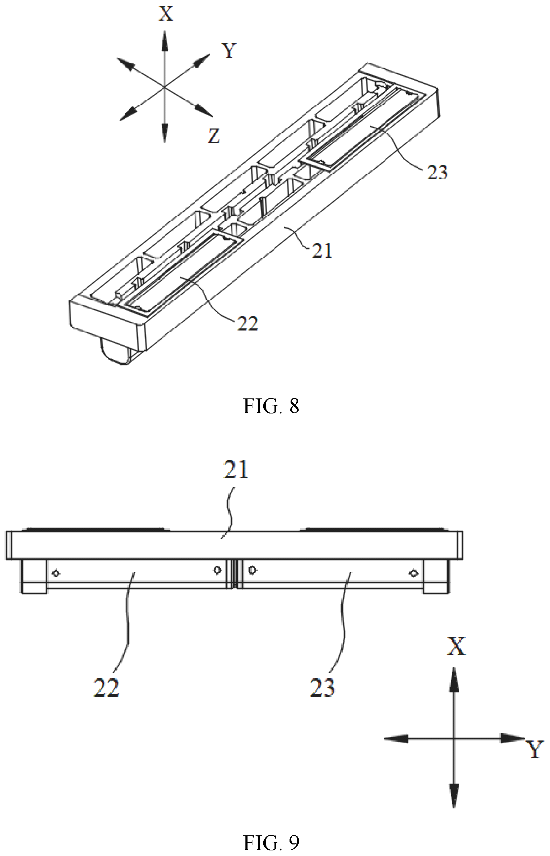

In some embodiments, referring to FIG. 8 to FIG. 10, the first connecting member 22 includes not only the first exposed portion 222 and the first connecting portion 221 but also a third connecting portion 223 connected to the first connecting portion 221. The first connecting portion 221 includes a connecting surface extending along the first direction X, and the third connecting portion 223 also includes a connecting surface extending along the first direction X. The second connecting member 23 includes not only the second exposed portion 232 and the second connecting portion 231 but also a fourth connecting portion 241 connected to the second connecting portion 231. The second connecting portion 231 includes a connecting surface extending along the first direction X, and the fourth connecting portion 241 also includes a connecting surface extending along the first direction X.

The battery 4 may include at least two electrode assemblies 30. The positive electrode tab 31 of one electrode assembly 30 may be in surface connection with the first connecting portion 221 of the first connecting member 22, and the negative electrode tab 32 of this electrode assembly 30 may be in surface connection with the second connecting portion 231 of the second connecting member 23. The positive electrode tab 31 of another electrode assembly 30 may be in surface connection with the third connecting portion 223 of the first connecting member 22, and the negative electrode tab 32 of this electrode assembly 30 may be in surface connection with the fourth connecting portion 241 of the second connecting member 23. In this way, the two electrode assemblies 30 are connected in parallel to form a parallel electrode assembly body. To be specific, the polarity of the tab connected to the connecting surface of the first connecting portion 221 is the same as the polarity of the tab connected to the connecting surface of the third connecting portion 223, and the polarity of the tab connected to the connecting surface of the second connecting portion 231 is the same as the polarity of the tab connected to the connecting surface of the fourth connecting portion 241.

One first connecting member 22 and one second connecting member 23, which each include two connecting portions as described above, can be used as one connecting group, and each connecting group is correspondingly used for one parallel electrode assembly body. More parallel electrode assembly bodies formed through connection by connecting groups can be formed by more (for example, 4, 6, or 8) electrode assemblies 30, more (for example, 4, 6, or 8) first connecting members 22, and more (for example, 4, 6, or 8) second connecting members 23.

In an example, the multiple electrode assemblies 30 include a first electrode assembly and a second electrode assembly. One of the connecting surface of the first connecting portion 221 and the connecting surface of the second connecting portion 231 is connected to the positive electrode tab 31 of the first electrode assembly, and the other is connected to the negative electrode tab 32 of the first electrode assembly. One of the connecting surface of the third connecting portion 223 and the connecting surface of the fourth connecting portion 241 is connected to the positive electrode tab 31 of the second electrode assembly, and the other is connected to the negative electrode tab 32 of the second electrode assembly. The polarity of the tab connected to the connecting surface of the first connecting portion 221 is the same as the polarity of the tab connected to the connecting surface of the third connecting portion 223, and the polarity of the tab connected to the connecting surface of the second connecting portion 231 is the same as the polarity of the tab connected to the connecting surface of the fourth connecting portion 241.

Thus, at least two electrode assemblies without bent tabs are connected in parallel through one top cover assembly 20, improving the connection reliability and improving the parallel connection efficiency.

In an example, the connecting surface of the first connecting portion 221 is connected to the positive electrode tab 31 of the first electrode assembly, the connecting surface of the second connecting portion 231 is connected to the negative electrode tab 32 of the first electrode assembly, the connecting surface of the third connecting portion 223 is connected to the positive electrode tab 31 of the second electrode assembly, and the connecting surface of the fourth connecting portion 241 is connected to the negative electrode tab 32 of the second electrode assembly.

In another example, the connecting surface of the first connecting portion 221 is connected to the negative electrode tab 32 of the first electrode assembly, the connecting surface of the second connecting portion 231 is connected to the positive electrode tab 31 of the first electrode assembly, the connecting surface of the third connecting portion 223 is connected to the negative electrode tab 32 of the second electrode assembly, and the connecting surface of the fourth connecting portion 241 is connected to the positive electrode tab 31 of the second electrode assembly.

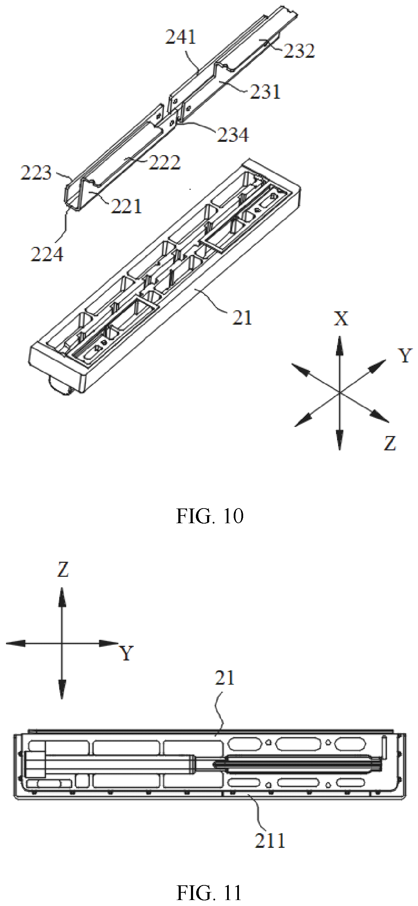

The first connecting member 22 and the second connecting member 23 can constitute one connecting group, where each connecting group can implement parallel connection between two electrode assemblies. FIG. 10 illustrates an example in which one connecting group is provided on one top cover body 21 to implement parallel connection between two electrode assemblies. It can be understood that multiple connecting groups may alternatively be arranged side by side on one top cover body 21, to implement parallel connection between multiple electrode assemblies.

In some embodiments, the first connecting portion 221, the first exposed portion 222, and the third connecting portion 223 form an integrated structure. The second connecting portion 231, the second exposed portion 232, and the fourth connecting portion 241 form an integrated structure. This facilitates connection with the positive electrode tab and the negative electrode tab, achieves more reliable connection, improving the reliability of the battery, and reducing the number of parts.

In some embodiments, referring to FIG. 10, the first connecting portion 221 is connected to the third connecting portion 223 through a first bent portion 224, the first bent portion 224 is bent relative to the first connecting portion 221 and the third connecting portion 223, one end of the first connecting portion 221 in the first direction X is connected to the first exposed portion 222, the other end of the first connecting portion 221 in the first direction X is connected to one end of the first bent portion 224, the other end of the first bent portion 224 is connected to one end of the third connecting portion 223 in the first direction X, and the third connecting portion 223 extends parallel to the first connecting portion 221.

The second connecting portion 231 and the fourth connecting portion 241 are connected through a second bent portion 234, the second bent portion 234 is bent relative to the second connecting portion 231 and the fourth connecting portion 241, one end of the second connecting portion 231 in the first direction X is connected to the second exposed portion 232, the other end of the second connecting portion 231 in the first direction X is connected to one end of the second bent portion 234, the other end of the second bent portion 234 is connected to one end of the fourth connecting portion 241 in the first direction X, and the fourth connecting portion 241 extends parallel to the second connecting portion 231.

The first connecting portion 221 and the third connecting portion 223 can be connected through the first bent portion 224 to form a substantially U-shaped integrated structure; and the second connecting portion 231 and the fourth connecting portion 241 can be connected through the second bent portion 234 to form a substantially U-shaped integrated structure, facilitating respective connections with the positive electrode tab and negative electrode tab of the electrode assembly, and achieving more reliable parallel connection between the electrode assemblies, thereby improving the reliability of the battery.

In some embodiments, the first connecting member 22 and the second connecting member 23 are arranged side by side along the second direction Y, the first connecting portion 221 of the first connecting member 22 and the second connecting portion 231 of the second connecting member 23 are located on the same side of the third direction Z, and the third connecting portion 223 of the first connecting member 22 and the fourth connecting portion 241 of the second connecting member 23 are located on the other same side of the third direction Z. Thus, two electrode assemblies arranged side by side along the third direction Z can be connected in parallel through one top cover assembly 20.

In addition, the embodiments shown in FIG. 5, the embodiments shown in FIG. 7, and the embodiments shown in FIG. 10 can be combined with each other. The embodiments shown in FIG. 5 can be used to form a series electrode assembly body or a parallel electrode assembly body. The embodiments shown in FIG. 7 can be used to form a series electrode assembly body or a parallel electrode assembly body. The embodiments shown in FIG. 10 can be used to form a parallel electrode assembly body. Therefore, the above embodiments can be used alone or used in combination according to the series connection, parallel connection, or series-parallel connection needs of the electrode assemblies.

In some embodiments, the first exposed portion 222 and the first connecting portion 221 are connected through a first overcurrent bottleneck portion 225; and/or, the second exposed portion 232 and the second connecting portion 231 are connected through a second overcurrent bottleneck portion.

Referring to FIG. 7, an example in which the first exposed portion 222 and the first connecting portion 221 are connected through a first overcurrent bottleneck portion 225 is used for description, where the first overcurrent bottleneck portion 225 is configured to be fused when a current passing through the first connecting member 22 is too large (reaching the bottleneck), to disconnect the first exposed portion 222 from the first connecting portion 221, thereby preventing the spread of excessive current to the electrode assembly 30, reducing the risk of thermal runaway, and improving the reliability of the battery. It can be seen that the so-called overcurrent bottleneck portion refers to a portion in the first connecting member 22 or the second connecting member 23 with the lowest current passing capacity (the smallest allowable current). When an excessive current continuously passes through this portion, this portion may be fused to disconnect a current path.

In some embodiments, a cross-sectional area of the first overcurrent bottleneck portion 225 is smaller than a cross-sectional area of the first connecting portion 221.

The cross-sectional area herein refers to an area of a cross section of a conductor perpendicular to a current direction. In the example shown in FIG. 7, for the first overcurrent bottleneck portion 225, the current direction is consistent with the first direction X, and the cross section is parallel to both the second direction Y and the third direction Z.

In the example shown in FIG. 7, the first overcurrent bottleneck portion 225 is formed by two thin strip portions that are connected to the first connecting portion 221 and extend along the first direction X, and a conductor between the two thin strip portions is removed. Certainly, there may be only one thin strip portion. The overcurrent bottleneck portion may alternatively be formed in other suitable forms.

The cross-sectional area of the first overcurrent bottleneck portion 225 is smaller than the cross-sectional area of the first connecting portion 221, so that when a current passing through the first connecting member is too large, the first overcurrent bottleneck portion 225 is fused preferentially as compared to the first connecting portion 221, to disconnect the first exposed portion 222 from the first connecting portion 221, thereby suppressing or preventing the spread of excessive current to the electrode assembly 30, and reducing the risk of thermal runaway.

Similarly, a cross-sectional area of the second overcurrent bottleneck portion is smaller than a cross-sectional area of the second connecting portion.

Exemplarily, the first overcurrent bottleneck portion 225 includes an electrical connection portion that is narrower than the first exposed portion 222 and the first connecting portion 221. The second overcurrent bottleneck portion includes an electrical connection portion that is narrower than the second exposed portion and the second connecting portion.

In some embodiments, the first connecting member 22 and the second connecting member 23 are respectively injection-molded with the top cover body 21. Thus, the first connecting member 22 and the second connecting member 23 are integrally formed with the top cover body 21, achieving more stable connection, thereby improving the reliability of the battery.

In some embodiments, a snap step 211 (shown in FIG. 11) is provided on a bottom surface of the top cover body 21 facing away from the top surface along the first direction X, and the top cover body 21 closes the opening of the housing 10 by cooperation with an opening edge of the housing 10 through the snap step 211.

The following further describes specific embodiments of this disclosure.

An embodiment of this disclosure provides a battery. Referring to FIG. 7, the battery includes: a housing 10, a top cover assembly 20, and an electrode assembly 30. The housing 10 defines an accommodation space and has an opening on one side. The top cover assembly 20 is provided on the housing 10 and closes the opening. The top cover assembly 20 includes a top cover body 21, a first connecting member 22, and two second connecting members 23 spaced apart from each other, where the first connecting member 22 and the two second connecting members 23 are conductive and provided on the top cover body 21. The first connecting member 22 includes a first connecting portion 221 and a third connecting portion 223 connected to each other, and a first exposed portion 222 that is connected to the first connecting portion 221 in a bent manner. Each second connecting member 23 includes a second connecting portion 231 and a second exposed portion 232 that is connected to the second connecting portion 231 in a bent manner. The first connecting portion 221, the second connecting portion 231, and the two third connecting portions 223 each include a connecting surface extending along the first direction X. The first exposed portion 222 and the second exposed portion 232 are both exposed outside the housing 10. The electrode assembly 30 is accommodated in the accommodation space. Two electrode assemblies are provided, where each electrode assembly 30 includes a positive electrode tab 31 and a negative electrode tab 32 extending out without bending along the first direction X. The connecting surface of the first connecting portion 221 is connected to the positive electrode tab 31 of one electrode assembly 30, the connecting surface of the second connecting portion 231 of one second connecting member that is on the same side as the first connecting portion 221 along the third direction Z is connected to the negative electrode tab 32 of the one electrode assembly 30, the third connecting portion 223 is connected to the negative electrode tab 32 of another electrode assembly 30, and the second connecting portion 231 of the other second connecting member 23 that is on the same side as the third connecting portion 223 along the third direction Z is connected to the positive electrode tab 31 of the another electrode assembly 30. In this way, two electrode assemblies 30 are connected in series through one top cover assembly 20.

An insulating blocking member 25 located between the second connecting portions 231 of two second connecting members 23 is provided on the top cover body 21, and is configured to prevent short circuit between the negative electrode tab 32 and the positive electrode tab 31 connected to the two second connecting portions 231.

A first overcurrent bottleneck portion 225 is provided between the first exposed portion 222 and the first connecting portion 221, and is configured to be fused when a current passing through the first connecting member 22 is too large (reaching the bottleneck), to disconnect the first exposed portion 222 from the first connecting portion 221, thereby preventing the spread of excessive current to the electrode assembly 30, reducing the risk of thermal runaway, and improving the reliability of the battery.

Referring to FIG. 2, multiple batteries 4 can be connected through the top cover assembly 20, to be further grouped to form a battery pack 100.

Another embodiment of this disclosure provides a battery. Referring to FIG. 10, the battery includes: a housing 10, a top cover assembly 20, and an electrode assembly 30. The housing 10 defines an accommodation space and has an opening on one side. The top cover assembly 20 is provided on the housing 10 and closes the opening. The top cover assembly 20 includes a top cover body 21, as well as a first connecting member 22 and a second connecting member 23 that are conductive and provided on the top cover body 21. The first connecting member 22 includes a first connecting portion 221 and a third connecting portion 223 connected to each other, and a first exposed portion 222 that is connected to the first connecting portion 221 in a bent manner. The second connecting member 23 includes a second connecting portion 231 and a fourth connecting portion 241 connected to each other, and a second exposed portion 232 that is connected to the second connecting portion 231 in a bent manner. The first connecting portion 221, the second connecting portion 231, the third connecting portion 223, and the fourth connecting portion 241 each include a connecting surface extending along the first direction X. The first exposed portion 222 and the second exposed portion 232 are both exposed outside the housing 10. The electrode assembly 30 is accommodated in the accommodation space. Two electrode assemblies are provided, where each electrode assembly 30 includes a positive electrode tab 31 and a negative electrode tab 32 extending out without bending along the first direction X. The connecting surface of the first connecting portion 221 is connected to the positive electrode tab 31 of one electrode assembly 30, the connecting surface of the second connecting portion 231 is connected to the negative electrode tab 32 of the one electrode assembly 30, the third connecting portion 223 is connected to the positive electrode tab 31 of another electrode assembly 30, and the fourth connecting portion 241 is connected to the negative electrode tab 32 of the another electrode assembly 30. In this way, two electrode assemblies 30 are connected in parallel through one top cover assembly 20.

The above provides exemplary descriptions of the battery provided by the embodiments of this disclosure. In addition, an embodiment of this disclosure further provides a top cover assembly 20 for the above battery. The structure of the top cover assembly 20 is as described above, and details are not described herein again.

This disclosure further provides a battery pack 100, including: at least one battery 4 mentioned above, and at least one busbar component that is electrically connected to a first exposed portion 222 and a second exposed portion 232 to implement an electrical connection between the batteries 4. The batteries 4 may be connected in series, parallel, or series-parallel.

In the battery 4 provided by this embodiment of this disclosure, since a tab can be connected to a connecting member without bending, the risk of fracture of the tab is reduced, and thus the reliability of the battery pack 100 can be improved.

In addition, although not shown in the figure, the battery pack 100 may further include a box for accommodating one or more batteries 4. In some embodiments, the box further includes a cover plate to form a sealed space for accommodating the battery 4. In the battery pack 100, multiple batteries 4 may be arranged along a second direction Y and/or a third direction Z.

In some embodiments, referring to FIG. 2, top cover assemblies 20 of adjacent batteries 4 are connected to each other, and each top cover assembly 20 respectively closes the opening of the corresponding housing 10.

In each battery 4, the tabs are connected to the top cover assemblies, and multiple top cover assemblies 20 are connected in pairs to form groups to constitute the battery pack 100. This, as compared to a traditional method in which the batteries (electrode assemblies) are first grouped and then the tabs are connected to the connecting members, facilitates the connection of the tabs to the connecting members, and reduces or even prevents the risk of fracture of the tabs due to bending, thereby achieving higher connection reliability.

In some embodiments, in two adjacent top cover assemblies 20, one top cover assembly 20 is provided with a snap protrusion 212 (shown in FIG. 5), and the other top cover assembly 20 is provided with a snap groove, where the top cover assemblies 20 of adjacent batteries 4 are connected to each other through snap fit of the snap protrusion 212 and the snap groove.

As shown in FIG. 5, a protruding strip extending along the second direction Y may be formed on one of two end surfaces of the top cover body 21 along the third direction Z, and a groove extending along the second direction Y may be formed on the other. By cooperation of the protruding strip of one top cover body 21 and the groove of another adjacent top cover body 21, the two top cover bodies 21 are spliced. The first exposed portion 222 and the second exposed portion 232 provided on the top cover body 21 may be connected through a busbar component. In this way, the batteries 4 are disposed close to each other and are electrically connected in groups.

The multiple batteries 4 are grouped to form the battery pack 100 through the snap fit of the snap protrusion 212 and the snap groove of the top cover assemblies 20 of adjacent batteries 4, improving the grouping efficiency.

In some embodiments, multiple batteries 4 are accommodated in the battery pack 100. Between these batteries 4, connection methods (series connection or parallel connection) for their respective electrode assemblies, the form and combination method of the first connecting member 22 and the second connecting member 23 in the top cover assembly 20, and the like may be the same or different.

This disclosure further provides an electric apparatus, including at least one battery 4 or at least one battery pack 100 for providing electrical energy.

This disclosure further provides an energy storage apparatus, including at least one battery 4 or at least one battery pack 100, where the battery is capable of storing electrical energy and providing electrical energy.

The following describes a battery manufacturing method provided by this disclosure.

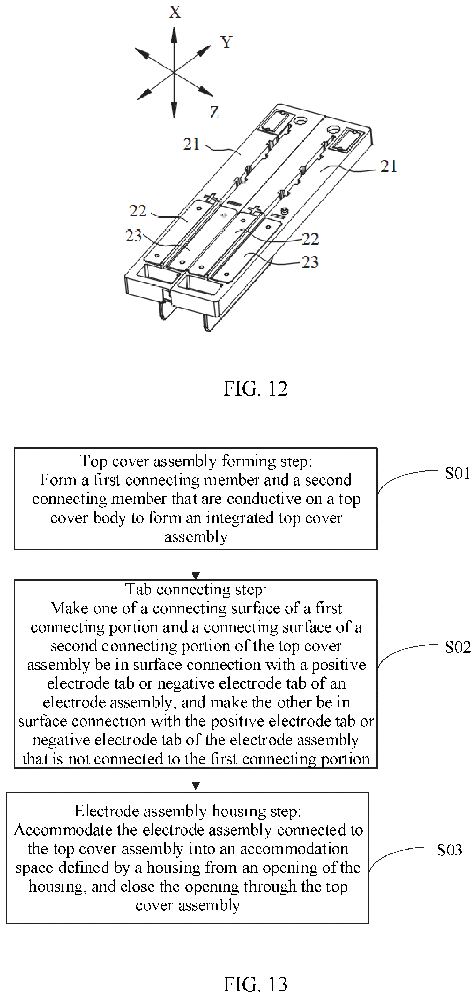

Referring to FIG. 13, a battery manufacturing method provided by this disclosure includes the following steps.

S01. A top cover assembly forming step: Form a first connecting member and a second connecting member that are conductive on a top cover body to form an integrated top cover assembly, where the first connecting member includes a first connecting portion and a first exposed portion connected to the first connecting portion, and the second connecting member includes a second connecting portion and a second exposed portion connected to the second connecting portion.

S02. A tab connecting step: Make one of a connecting surface of the first connecting portion and a connecting surface of the second connecting portion of the top cover assembly be in surface connection with a positive electrode tab or negative electrode tab of an electrode assembly, and make the other be in surface connection with the positive electrode tab or negative electrode tab of the electrode assembly that is not connected to the first connecting portion, where the positive electrode tab, the negative electrode tab, the connecting surface of the first connecting portion, and the connecting surface of the second connecting portion all extend along a first direction.

S03. An electrode assembly housing step: Accommodate the electrode assembly connected to the top cover assembly into an accommodation space defined by a housing from an opening of the housing, and close the opening through the top cover assembly, where the first exposed portion and the second exposed portion are exposed outside the housing.

Since the respective connecting surfaces of the first connecting portion and the second connecting portion extend along the same direction as the extension directions of the positive electrode tab and the negative electrode tab, the positive electrode tab and the negative electrode tab can respectively achieve non-bending connection with the first connecting member and the second connecting member, omitting a step of bending the tabs, reducing the risk of fracture of the tabs, and improving the battery manufacturing efficiency while improving the connection reliability.

In some embodiments, the top cover assembly forming step S01 includes the following step.

Perform injection molding on the first connecting member, the second connecting member, and the top cover body to form an integrated top cover assembly.

Since the first connecting member and the second connecting member form an integrated injection-molded structure with the top cover body, more stable connection is achieved, and thus the reliability of the battery is improved.

In some embodiments, the tab connecting step S03 includes the following steps.

Connect one of the connecting surface of the first connecting portion in the first connecting member and the connecting surface of the second connecting portion in one second connecting member to a positive electrode tab of a first electrode assembly, and connect the other to a negative electrode tab of the first electrode assembly.

Connect one of the connecting surface of the third connecting portion in the first connecting member and the connecting surface of the second connecting portion in another second connecting member to a positive electrode tab of a second electrode assembly, and connect the other to a negative electrode tab of the second electrode assembly, where the third connecting portion is connected to the first connecting portion, the polarity of the tab connected to the connecting surface of the first connecting portion is opposite to the polarity of the tab connected to the connecting surface of the third connecting portion, and the polarities of the tabs connected to the connecting surfaces of the respective second connecting portions of the two second connecting members are opposite.

Thus, at least two electrode assemblies without bent tabs can be connected in series through one top cover, improving the connection reliability and battery manufacturing efficiency.

In some embodiments, the tab connecting step S02 includes the following steps.

Connect one of the connecting surface of the first connecting portion and the connecting surface of the second connecting portion to the positive electrode tab of the first electrode assembly, and connect the other to the negative electrode tab of the first electrode assembly.

Connect one of the connecting surface of the third connecting portion and the connecting surface of the fourth connecting portion of the top cover assembly to the positive electrode tab of the second electrode assembly, and connect the other to the negative electrode tab of the second electrode assembly, where the first connecting portion is connected to the third connecting portion, the second connecting portion is connected to the fourth connecting portion, the polarity of the tab connected to the connecting surface of the first connecting portion is the same as the polarity of the tab connected to the connecting surface of the third connecting portion, the polarity of the tab connected to the connecting surface of the second connecting portion is the same as the polarity of the tab connected to the connecting surface of the fourth connecting portion, and the polarity of the tab connected to the first connecting member is opposite to the polarity of the tab connected to the second connecting member.

Thus, at least two electrode assemblies without bent tabs are connected in parallel through one top cover, improving the connection reliability and battery manufacturing efficiency.

In some embodiments, after the electrode assembly housing step S02, the method further includes: a battery grouping step: sequentially connect the top cover assemblies of the batteries.

The batteries may first be connected through the tabs and the top cover assemblies, and are then connected into a group through their respective top cover assemblies, to form a battery pack. This, as compared to a traditional method in which the batteries are first grouped and then the tabs are connected to the connecting members, facilitates the connection of tabs to the connecting members, and achieves higher connection reliability.

The above embodiments are only used to illustrate the technical solutions of this disclosure and are not intended to limit them. Although this disclosure has been described in detail with reference to the foregoing embodiments, those of ordinary skill in the art should understand that modifications can still be made to the technical solutions recorded in the foregoing embodiments, or equivalent replacements can be made to some or all of the technical features. These modifications or replacements do not make the essence of the corresponding technical solutions depart from the scope of the technical solutions of the embodiments of this disclosure, and should all be covered within the scope of the claims and specification of this disclosure. In particular, as long as there is no structural conflict, the various technical features mentioned in the various embodiments can be combined in any manner. This disclosure is not limited to the specific embodiments disclosed herein, but includes all technical solutions falling within the scope of the claims.

## Claims

1. A battery, comprising:
a housing, defining an accommodation space and having an opening on one side;
a top cover assembly, provided on the housing and closing the opening, wherein the top cover assembly comprises a top cover body as well as a first connecting member and a second connecting member that are conductive and provided on the top cover body, wherein the first connecting member comprises a first connecting portion and a first exposed portion connected to the first connecting portion, and the second connecting member comprises a second connecting portion and a second exposed portion connected to the second connecting portion, wherein the first connecting portion and the second connecting portion each comprise a connecting surface extending along a first direction, and the first exposed portion and the second exposed portion are exposed outside the housing; and
an electrode assembly, accommodated in the accommodation space, wherein the electrode assembly comprises a positive electrode tab and a negative electrode tab extending along the first direction, wherein the connecting surface of the first connecting portion is in surface connection with the positive electrode tab or the negative electrode tab, and the connecting surface of the second connecting portion is in surface connection with the positive electrode tab or the negative electrode tab that is not connected to the first connecting portion.

2. The battery according to claim 1, wherein:
the first connecting portion and the first exposed portion are connected in a bent manner; and
the second connecting portion and the second exposed portion are connected in a bent manner.

3. The battery according to claim 2, wherein the first exposed portion and the second exposed portion are both parallel to a top surface of the top cover body.

4. The battery according to any one of claims 1 to 3, wherein:
the first connecting member and the second connecting member are arranged side by side along a second direction on the top cover body; and/or
the first connecting member and the second connecting member are arranged side by side along a third direction on the top cover body,
wherein the first direction, the second direction, and the third direction are perpendicular to each other.

5. The battery according to any one of claims 1 to 4, wherein:
the first connecting member further comprises a third connecting portion connected to the first connecting portion, wherein the third connecting portion comprises a connecting surface extending along the first direction; and
the number of the second connecting members is an even number.

6. The battery according to claim 5, wherein:
the battery comprises at least two electrode assemblies;
the first connecting portion of the first connecting member is connected to the positive electrode tab or the negative electrode tab of one electrode assembly, and the third connecting portion of the first connecting member is connected to the positive electrode tab or the negative electrode tab of another electrode assembly; and
tabs in each electrode assembly that are not connected to the first connecting member are respectively connected to the second connecting portion of the second connecting member.

7. The battery according to any one of claims 1 to 4, wherein:
the first connecting member further comprises a third connecting portion connected to the first connecting portion, and the third connecting portion comprises a connecting surface extending along the first direction; and
the second connecting member further comprises a fourth connecting portion connected to the second connecting portion, and the fourth connecting portion comprises a connecting surface extending along the first direction.

8. The battery according to claim 7, wherein:
the battery comprises at least two electrode assemblies;
the first connecting portion of the first connecting member is connected to the positive electrode tab of one electrode assembly, and the third connecting portion of the first connecting member is connected to the positive electrode tab of another electrode assembly; and
the negative electrode tab of the one electrode assembly and the negative electrode tab of the another electrode assembly are respectively connected to the second connecting portion and the fourth connecting portion of the second connecting member.

9. The battery according to claim 5 or 6, wherein:
the first connecting portion and the third connecting portion are connected through a first bent portion, and the first bent portion is bent relative to the first connecting portion and the third connecting portion; and
one end of the first connecting portion in the first direction is connected to the first exposed portion, the other end of the first connecting portion in the first direction is connected to one end of the first bent portion, the other end of the first bent portion is connected to one end of the third connecting portion in the first direction, and the third connecting portion extends parallel to the first connecting portion.

10. The battery according to claim 7 or 8, wherein:
the first connecting portion is connected to the third connecting portion through a first bent portion; the first bent portion is bent relative to the first connecting portion and the third connecting portion; one end of the first connecting portion in the first direction is connected to the first exposed portion; the other end of the first connecting portion in the first direction is connected to one end of the first bent portion; the other end of the first bent portion is connected to one end of the third connecting portion in the first direction; and the third connecting portion extends parallel to the first connecting portion; and
the second connecting portion and the fourth connecting portion are connected through a second bent portion; the second bent portion is bent relative to the second connecting portion and the fourth connecting portion; one end of the second connecting portion in the first direction is connected to the second exposed portion; the other end of the second connecting portion in the first direction is connected to one end of the second bent portion; the other end of the second bent portion is connected to one end of the fourth connecting portion in the first direction; and the fourth connecting portion extends parallel to the second connecting portion.

11. The battery according to claim 5 or 6, wherein an insulating blocking member is provided between the second connecting portions of two adjacent second connecting members.

12. The battery according to any one of claims 1 to 11, wherein:
the first exposed portion and the first connecting portion are connected through a first overcurrent bottleneck portion; and/or
the second exposed portion and the second connecting portion are connected through a second overcurrent bottleneck portion.

13. The battery according to claim 12, wherein:
a cross-sectional area of the first overcurrent bottleneck portion is smaller than a cross-sectional area of the first connecting portion; and
a cross-sectional area of the second overcurrent bottleneck portion is smaller than a cross-sectional area of the second connecting portion.

14. The battery according to any one of claims 1 to 13, wherein the first connecting member and the second connecting member are respectively injection-molded with the top cover body.

15. A top cover assembly, comprising:
a top cover body; and
a first connecting member and a second connecting member that are conductive and provided on the top cover body, wherein the first connecting member comprises a first connecting portion and a first exposed portion connected to the first connecting portion, the second connecting member comprises a second connecting portion and a second exposed portion connected to the second connecting portion, and the first connecting portion and the second connecting portion each comprise a connecting surface extending along a first direction,
wherein the connecting surface of the first connecting portion is configured to be connected to a surface of a positive electrode tab or a negative electrode tab of an electrode assembly, and the connecting surface of the second connecting portion is configured to be connected to a surface of the positive electrode tab or the negative electrode tab, wherein the connecting surface of the first connecting portion and the connecting surface of the second connecting portion extend along the same direction as extension directions of the positive electrode tab and the negative electrode tab.

16. The top cover assembly according to claim 15, wherein:
the first connecting portion and the first exposed portion are connected in a bent manner; and
the second connecting portion and the second exposed portion are connected in a bent manner.

17. The top cover assembly according to claim 16, wherein the first exposed portion and the second exposed portion are both parallel to a top surface of the top cover body.

18. The top cover assembly according to any one of claims 15 to 17, wherein:
the first connecting member and the second connecting member are arranged side by side along a second direction on the top cover body; and/or
the first connecting member and the second connecting member are arranged side by side along a third direction on the top cover body,
wherein the first direction, the second direction, and the third direction are perpendicular to each other.

19. The top cover assembly according to any one of claims 15 to 18, wherein the first connecting member further comprises a third connecting portion connected to the first connecting portion, the third connecting portion comprises a connecting surface extending along the first direction, and the number of the second connecting members is an even number.

20. The top cover assembly according to any one of claims 15 to 18, wherein:
the first connecting member further comprises a third connecting portion connected to the first connecting portion, and the third connecting portion comprises a connecting surface extending along the first direction; and
the second connecting member further comprises a fourth connecting portion connected to the second connecting portion, and the fourth connecting portion comprises a connecting surface extending along the first direction.

21. The top cover assembly according to claim 19, wherein:
the first connecting portion and the third connecting portion are connected through a first bent portion, and the first bent portion is bent relative to the first connecting portion and the third connecting portion; and
one end of the first connecting portion in the first direction is connected to the first exposed portion, the other end of the first connecting portion in the first direction is connected to one end of the first bent portion, the other end of the first bent portion is connected to one end of the third connecting portion in the first direction, and the third connecting portion extends parallel to the first connecting portion.

22. The top cover assembly according to claim 20, wherein:
the first connecting portion is connected to the third connecting portion through a first bent portion; the first bent portion is bent relative to the first connecting portion and the third connecting portion; one end of the first connecting portion in the first direction is connected to the first exposed portion; the other end of the first connecting portion in the first direction is connected to one end of the first bent portion; the other end of the first bent portion is connected to one end of the third connecting portion in the first direction; and the third connecting portion extends parallel to the first connecting portion; and
the second connecting portion and the fourth connecting portion are connected through a second bent portion; the second bent portion is bent relative to the second connecting portion and the fourth connecting portion; one end of the second connecting portion in the first direction is connected to the second exposed portion; the other end of the second connecting portion in the first direction is connected to one end of the second bent portion; the other end of the second bent portion is connected to one end of the fourth connecting portion in the first direction; and the fourth connecting portion extends parallel to the second connecting portion.

23. The top cover assembly according to claim 19, wherein an insulating blocking member is provided between the second connecting portions of two adjacent second connecting members.

24. The top cover assembly according to any one of claims 15 to 23, wherein:
the first exposed portion and the first connecting portion are connected through a first overcurrent bottleneck portion; and/or
the second exposed portion and the second connecting portion are connected through a second overcurrent bottleneck portion.

25. The top cover assembly according to claim 24, wherein:
a cross-sectional area of the first overcurrent bottleneck portion is smaller than a cross-sectional area of the first connecting portion; and
a cross-sectional area of the second overcurrent bottleneck portion is smaller than a cross-sectional area of the second connecting portion.

26. The top cover assembly according to any one of claims 15 to 24, wherein the first connecting member and the second connecting member are respectively injection-molded with the top cover body.

27. A battery pack, comprising:
at least one battery according to any one of claims 1 to 14; and
at least one busbar component that is electrically connected to the first exposed portion and the second exposed portion so as to electrically connect the batteries in series and/or in parallel.

28. The battery pack according to claim 27, wherein the top cover assemblies of adjacent batteries are connected to each other, and the top cover assemblies respectively close the openings of the corresponding housings.

29. The battery pack according to claim 27 or 28, wherein in two adjacent top cover assemblies, one top cover assembly is provided with a snap protrusion, and the other top cover assembly is provided with a snap groove, wherein the top cover assemblies of the adjacent batteries are connected to each other through snap fit of the snap protrusion and the snap groove.

30. An electric apparatus, comprising the battery according to any one of claims 1 to 14 or the battery pack according to any one of claims 27 to 29 for providing electrical energy.

31. An energy storage apparatus, comprising the battery according to any one of claims 1 to 14 or the battery pack according to any one of claims 27 to 29, wherein the battery is capable of storing electrical energy and providing electrical energy.

32. A battery manufacturing method, comprising:
a top cover assembly forming step: forming a first connecting member and a second connecting member that are conductive on a top cover body to form an integrated top cover assembly, wherein the first connecting member comprises a first connecting portion and a first exposed portion connected to the first connecting portion, and the second connecting member comprises a second connecting portion and a second exposed portion connected to the second connecting portion;
a tab connecting step: bringing one of a connecting surface of the first connecting portion and a connecting surface of the second connecting portion of the top cover assembly into surface connection with a positive electrode tab or negative electrode tab of an electrode assembly, and bringing the other into surface connection with the positive electrode tab or negative electrode tab of the electrode assembly that is not connected to the first connecting portion, wherein the positive electrode tab, the negative electrode tab, the connecting surface of the first connecting portion, and the connecting surface of the second connecting portion all extend along a first direction; and
an electrode assembly housing step: accommodating the electrode assembly connected to the top cover assembly into an accommodation space defined by a housing from an opening of the housing, and closing the opening through the top cover assembly, wherein the first exposed portion and the second exposed portion are exposed outside the housing.

33. The battery manufacturing method according to claim 32, wherein the top cover assembly forming step comprises:
performing injection molding on the first connecting member, the second connecting member, and the top cover body to form the integrated top cover assembly.
